Europäisches Patentamt

European Patent Office

Office européen des brevets

(11) Publication number: **0 411 790 A1**

# EUROPEAN PATENT APPLICATION

(21) Application number: 90307919.2

(51) Int. Cl.5: **C08G 69/28**

(22) Date of filing: **19.07.90**

(30) Priority: **29.07.89 GB 8917385**

(43) Date of publication of application:
**06.02.91 Bulletin 91/06**

(84) Designated Contracting States:
**AT BE CH DE DK ES FR GB GR IT LI LU NL SE**

(71) Applicant: **BP Chemicals Limited**
**Belgrave House 76 Buckingham Palace Road**
**London, SW1W 0SU(GB)**

(72) Inventor: **Studholme, Matthew Benjamin**
**BP Chemicals Limited, Bo'ness Road**
**Grangemouth, Stirlingshire FK3 9XH(GB)**
Inventor: **Orpin, Murray Roy**
**BP Chemicals Limited, Barry Business**
**Centre**
**Sully, South Glamorgan CF6 2YU(GB)**

(74) Representative: **Krishnan, Suryanarayana**
**Kalyana et al**
**BP INTERNATIONAL LIMITED Patents &**
**Agreements Division Chertsey Roadoad**
**Sunbury-on-Thames Middlesex TW16**
**7LN(GB)**

(54) Process for the preparation of nylon salts.

(57) This invention relates to a process for producing nylon salts from hot aqueous solutions thereof by cooling said solutions under controlled conditions.

The process does not use any organic solvents and hence the salts are easily filtered and dried.

EP 0 411 790 A1

## PROCESS FOR THE PREPARATION OF NYLON SALTS

This invention relates to a process for the preparation of aromatic dicarboxylic acid based nylon salts (especially terephthalamide, isophthalamide and naphthalamide based salts) and describes improvements over prior art nylon salt preparative methods.

A conventional method for producing the nylon salt precursor of nylon-6,6 (hexamethylene diammonium adipamide, stoichiometric adduct of hexamethylene diamine and adipic acid with zwitter ion structure), as described in GB-A-1034307 and which most closely represents current commercial practice, may be outlined as follows. Solutions of adipic acid and hexamethylene diamine in methanol are heated to reflux under a nitrogen gas atmosphere and mixed in a jacketed, agitated reactor. The methanol insoluble salt precipitates out and is separated from the mother liquor. The salt cake is washed with fresh methanol and then dissolved in water to give a 48% solution. Methanol is recovered and purified by distillation. The nylon salt solution is decolourised with activated carbon, as described in US-A-3337612 and GB-A-1038460, concentrated to a 65% solution in an appropriate evaporation device and then clarified to remove all traces of solid. The nylon salt solution is then ready for transfer to nylon -6,6 production plant.

Because of the commercial significance of nylon-6,6 derived polymers, the vast majority of relevant literature describes its preparation in some detail. Where a particular polymerisation process demands that solid hexamethylene diammonium adipamide be isolated and used as monomer feedstock, exact and optimised preparative conditions have been reported in GB-A-1034307 and USP2130947. More recent industrial interest in special grades of polyamides other than nylon-6,6 which are also accessible from the appropriate nylon salt feedstock (either as a solid or in aqueous solution) requires corresponding preparative procedures to be established.

Conventional processes reviewed above appear to suffer from several disadvantages. The complexity and length of the process i.e. reactant dilution in methanol, followed by precipitation of salt and subsequent separation and washing of salt is usually followed by several steps including dissolution of salt in water, charcoal purification, solution concentration by evaporation, transfer to production plant and a final removal of solvent water prior to polycondensation, is unattractive. The need to handle in such conventional processes toxic, flammable and expensive solvents (including methanol and isopropanol) is undesirable, and purification and recycling of the solvent is necessary to maintain an economic process. It is also essential to separate the precipitated salt from methanol and redissolve it in water for purification by charcoal treatment (a process necessary to ensure removal of impurities and unreacted starting materials which may affect the molecular weight of the polyamide formed from the salt) prior to polyamidation (polycondensation). The known prior art methods would be inappropriate for handling nylon salts of low to medium solubility in water. The need to remove large volumes of water which is gradually concentrated from a 48% solution through a 65% solution and finally solid nylon salt by evaporation renders the process cost/energy inefficient. Additionally, for certain polyamide production processes (i.e. polyamides other than nylon-6,6), it may be required to isolate and handle the nylon salt as a dry, free flowing powder.

It has now been found that the above problems may be mitigated by adopting a specific process for the preparation of nylon salts which is particularly suitable for the preparation of speciality grades of polyamide polymers (i.e. grades of polyamide polymers other than nylon-6,6).

The process involves the controlled precipitation of the nylon salts in question from aqueous solution by optimisation of parameters such as temperature and concentration.

Accordingly, the present invention is a process for producing nylon salts from a hot aqueous solution thereof by cooling under controlled conditions, characterised in that

(a) the aqueous solution at about the boiling point of water contains a salt concentration in the range from 1 to 75 %w/w to a saturated solution of said salt,

(b) the hot aqueous solution is initially cooled rapidly till said solution is substantially close to the critical saturation temperature (hereafter 'CST') thereof and then cooled at the rate of 1-3$^\circ$C per hour, until the temperature is greater than 5$^\circ$C below the CST, and (c) said solution from (b) is further cooled, optionally in the presence of a crystalline seeding material, to ambient temperature or below so as to precipitate the nylon salt.

By "substantially close to the critical saturation temperature" (CST) is meant a temperature which is 3$^\circ$C above the CST of said solution. Some examples of the CST's of various solutions are given in the Examples accompanying this specification.

The pH of the salt solution to be cooled is that which would be obtained from an equimolar balance of the diacid and the diamine used for the nylon salt preparation. The pH is always equal to or greater than the pH obtained from a diacid/diamine equimolar balance by upto 0.5 but is preferably no more than 0.2 above the equimolar balance point pH.

Thus, the process is particularly suited to the preparation, purification and isolation of nylon salts derivable from aromatic dicarboxylic acids (especially terephthalic acid (TPA), isophthalic acid (IPA) and 2,6-naphthalenedicarboxylic acid (NDA)) and aliphatic, aromatic or cycloaliphatic diamines (specific examples include hexamethylene diamine (HMD), 2,2,4- and 2,4,4-trimethylhexamethylene diamine (TMHMD), isophorone diamine (IPD), meta- and para- xylylenediamine (MXD and PXD), dodecamethylene diamine (DDMD) and 4,4'-methylenebis(cyclohexylamine) (MBCHA)).

In a preferred process, stoichiometric (equimolar) quantities of the appropriate aromatic dicarboxylic acid and diamine are mixed in aqueous solution at a specified temperature and concentration.

In carrying out the present invention, a seeding material can optionally be added to aid precipitation of the nylon salt. The seeding material may be of any material which does not adversely affect the nylon salt formation or precipitation. The crystalline seeding material is preferably of the same nylon salt as is being prepared according to the invention.

Typical examples of preferred combinations of diacid and diamine include:

| Isophthalamides | |
|---|---|
| Name | designation |
| hexamethylenediammonium isophthalamide<br>m-xylylenediammonium isophthalamide | (IPA/HMD)<br>(IPA/MXD) |
| Terephthalamides | |
| hexamethylenediammonium terephthalamide<br>m-xylylenediammonium terephthalamide<br>trimethylhexamethylenediammonium terephthalamide*<br>4,4'-methylenebis(cyclohexylammonium)terephthalamide<br>isophoronediammonium terephthalamide | (TPA/HMD)<br>(TPA/MXD)<br>(TPA/TMHMD)<br>(TPA/MBCHA)<br>(TPA/IPD) |
| 2,6-naphthalamides | |
| hexamethylenediammonium 2,6-naphthalamide | (NDA/HMD) |

* 2,2,4 and 2,4,4 isomeric mixture.

The preparative schedule may be summarised in the following steps:

1. mixing of stoichiometric quantities of the appropriate diacid and diamine in specified quantities of distilled water under an atmosphere inert under the reaction conditions, (eg nitrogen gas) to form a solution/suspension,

2. heating the suspension/solution from step (1) to the specified reaction temperature,

3. heating the salt solution at the specified reaction temperature for a specified length of time to form a solution,

4. adjusting the pH of the solution from step (2) to the specified value by addition of appropriate quantities of diacid (to decrease pH value) or diamine (to increase pH value) as necessary,

5. purification of salt solution from step (4) by passage through appropriate activated charcoal materials to produce a purified eluate

6. cooling the eluate from step (5) to ambient temperature, to precipitate the nylon salt,

7. filtration of nylon salt formed in step (6),

8. drying of nylon salt from step (7),

9. reduction in particle size of nylon salt from step (8), and

10. addition of catalysts, stabilisers, modifiers for subsequent polycondensation reaction with the nylon salt from step (9).

Steps 8,9 and 10 may be combined into one operation if required. The resulting dry, free-flowing powder product then forms the feedstock for polyamide production.

The process for the manufacture of nylon salts based upon aromatic dicarboxylic acids herein described offers the following advantages:

1. the process is carried out in aqueous solution, no organic solvents/non-solvents are required,

2. salt precipitation occurs in the absence of organic non-solvents for the nylon salts,

3. salts thus obtained by the specified process are readily filtered and easily dried,

4. salts of low water solubility may be prepared in an economic manner,

5. no separate salt purification steps are required,

6. removal of large volumes of water via thermally induced evaporation prior to polycondensation is not required.

Various aspects of the preparative details of each salt require consideration. Close control of diacid-diamine balance is required to permit the formation of high molecular weight polymers, of approximately 4 end group equivalents per $10^6$ grams of salt and attainable molecular weight is reduced accordingly. For the salts dissolved here, the stoichiometric pH of each salt has been determined graphically by plotting the pH of an appropriate concentration of salt in water with known excesses of diacid or diamine. The stoichiometric pH's of nylon salt solutions prepared according to the present process are given in Table 1. During preparative processes, the pH of the nylon salt solution is adjusted to the stoichiometric pH by addition of diamine or diacid as appropriate to increase or decrease the pH respectively.

Typical data for nylon salts prepared according to the present process are presented in Table 3. Careful control of process conditions to control nucleation and to produce optimum yields of salts is necessary. To determine the optimum conditions for controlled salt precipitation, graphs of nylon salt concentration against temperature for solubility (equilibrium solubility of a solute in a solvent over a range of temperatures) and saturation (critical saturation temperatures obtained by slowly cooling solutions of varying solute concentrations until homogeneous nucleation occurs at a specific critical saturation temperature for each concentration) can be plotted. The difference in temperature between saturation and solubility at a particular solute concentration corresponds to the degree of supersaturation. Use of this information allows selection of the appropriate process conditions of temperature and concentration to maximise homogeneous nucleation efficiency. For salts described here, the technique of crystal seeding at the appropriate critical saturation temperature (providing a heterogeneous site for nucleation) coupled with rapid cooling from the critical saturation temperature (i.e. inducing supersaturation via thermal shock) is preferred. For salts which display particularly high degrees of supersaturation, IPA/HMD for example, such salts cannot be isolated easily (i.e. they remain in aqueous solution) unless these procedures are adopted. Critical saturation temperatures and yields (both crystalline - i.e. % of available salt isolated, and overall - i.e. % wt of salt prepared in one batch) for various nylon salts are presented in Table 3.

To produce salts of acceptable purity treatment of the salt solutions with activated carbon may be necessary. A number of commercially available activated carbons were evaluated for performance with nylon salts prepared by the present process. These were granular carbons supplied by Norit (UK) Ltd (C-GRANULAR and Rox 0,8 grades), Chemviron Carbon (CPG-LF and SGL grades) and CECA (ACL 40). Following performance testing, using techniques well known to those skilled in the art, for example determination of absorption isotherms and column testing, it was concluded that optimum performance may be obtained using Norit Rox 0,8 grade.

Following the formation of nylon salt precipitate using nucleation techniques described above, it may be necessary to separate the solid from the liquid phase. A number of techniques exist by which this may be achieved (e.g. centrifugation, filtration) but for the nylon salts prepared by the present process, vacuum/pressure filtration is preferably achieved using a variable chamber filter press (such as that supplied by VC Filters International (UK)). To achieve acceptable filtration characteristics for certain salts, control of solids content of slurries prior to filtration may be necessary. In particular for salts with particularly small particle sizes e.g. for salts formed from IPA/MXD and TPA/TMHMD, reducing the solids loading of the slurries was found to be necessary. A solids content of less than 25% was found to be necessary for these salts to ensure efficient filtration. Moisture contents after filtration are typically 20% by weight for $^+/_-5\%$ by weight. The thus formed filter cakes are then transferred to a drying system, as described below. An important feature of the present invention is the recycling of the mother liquor for use in subsequent salt preparations utilising the same diamine and diacid monomers. Although, in theory, the mother liquor may be reused indefinitely, in practice its use for no more than 10-20 preparations is recommended.

The filtered, wet salt cake may then be dried to a moisture content of less than 0.2% w/w. This process is preferably carried out using an agitated vacuum pan drier (such as that supplied by APV Pasilac (UK)). Using this drier, the salt cake may be heated under vacuum and with agitation to remove residual water. Use of an agitated drier has the advantage of reducing the filter cake to an even, small particle size to give a fine, free-flowing powder when dry. optionally, a non-agitated dryer may be used (e.g. vacuum oven), but a further processing step, involving particle size reduction may be required. Use of an agitated dryer provides the additional advantage of the ability to blend in additives useful in the subsequent polymerisation reaction. These additives may include catalysts including polyphosphoric acid, ammonium hypophosphite and metal hypophosphites) to accelerate the polyamidation reaction, viscosity stabilisers/chain termination agents (including monofunctional carboxylic acids e.g. benzoic and acetic acid), and heat/light stabilisers

4

(including copper compounds, phosphorus compounds and tertiary amines).

The salts thus produced by this process are now ready for use in the preparation of polyamides of high molecular weight.

The present invention is further illustrated with reference to the following Examples:

Example 1

TPA/TMHMD nylon salt was prepared at laboratory scale as follows:

The reactants (see Table 1) were charged to a 5 litre reaction flask and blanketed with nitrogen. The temperature of the reactants was raised to boiling point. The solution formed was checked for pH and adjusted if necessary to within the range 7.00-7.30. The solution pH was determined by taking a 23ml sample and diluting with 10ml of distilled water. The pH was measured at 25°C. The resultant salt solution was decolourised by the addition of activated carbon (1%w/v of Rox 0.8 ex Norit UK Ltd) and boiling under reflux for 1 hour. The mixture was then hot filtered through a Whatmans No 1 filter paper in a Buchner funnel to remove the carbon. The purified solution was cooled to 3°C above its CST i.e. 97°C and then cooled at the rate of 3°C per hour. When the temperature was 5°C below the CST, the cooling rate was increased to 20°C per hour until ambient temperature was reached. The resultant precipitated nylon salt was recovered by filtration under vacuum in a Buchner funnel and then dried in the vacuum oven at 80°C for 16 hours. A yield of 18.3% was obtained of white free-flowing powder with a melting point of 270°C.

Example 2

A nylon salt of TPA/TMHMD was prepared at pilot plant scale using the reactants and data shown in Tables 2 and 3 respectively below: The reactants and water were charged into a reactor and blanketed with nitrogen after which the temperature was raised to 99°C to form a homogeneous nylon salt solution. At this point the pH of the salt solution was checked and adjusted to a value of 7.00 $^+$ 0.15 as appropriate. The resultant salt solution was circulated through a bed of activated carbon (Rox 0,8 ex NORIT UK Ltd). The thus purified solution was then cooled to 3°C above its CST, i.e. 97°C at the rate of 3°C per hour. At the CST (i.e.94°C), 0.25% wt of preformed, dry, finely divided TPA/TMHMD salt was added as seed and cooling continued at the same rate until the temperature was 5°C below the CST (i.e. 89°C). At this temperature, this was allowed to cool relatively more rapidly e.g. 15-20°C/hr through 'natural' cooling to ambient temperature. The resultant precipitated nylon salt was recovered by filtration and represented a yield of about 55%.

The nylon salt recovered had a good particle size which enabled easy dewatering during filtration and was a free flowing product when dry thereby reducing handling problems and avoiding dust explosion hazards.

In a comparative experiment where the initial controlled cooling was not used, the yield of the precipitated nylon salt upon rapid cooling was less than 5%.

As the method of preparation for each salt is essentially identical, differing only in reaction conditions, only one example is given for a laboratory scale preparation (Example 1) and one example for a pilot-plant scale preparation (Example 2) scale-up from pilot scale is straight-forward for those skilled in the art. Reaction conditions for the preparation of individual salts on the laboratory and pilot scale are given Tables 1 and 2.

TABLE 1

| Laboratory Scale Preparation of Nylon Salts | | | | | | | | |
|---|---|---|---|---|---|---|---|---|
| Nylon Salt | Solubility W/W | Molar Scale | Wt diacid g | Wt diamine g | Wt water g | Solution# pH | Yield % | m.pt* °C |
| TPA/HMD | 70 | 2 | 332 | 232 | 1500 | 7.4 | 17.1 | 273 |
| IPA/HMD | 125 | 2.5 | 415 | 290 | 1400 | 7.28 | 30.5 | 219 |
| TPA/TMHMD | 60 | 2 | 332 | 316 | 1900 | 7.0 | 18.3 | 270 |
| TPA/MXD | 7.5 | 0.75 | 124.5 | 102 | 3000 | 6.38 | 4.9 | 287 |
| IPA/MXD | 30 | 2 | 332 | 272 | 2000 | 6.68 | 24.3 | 248 |
| TPA/IPD | 50 | 1.5 | 249 | 255 | 1200 | 6.86 | 15.0 | 279 |
| TPA/DDCHM | 5 | 1.0 | 83 | 100 | 3400 | 6.85 | 3.8 | 260 |
| HMD use as 60% solution in water. | | | | | | | | |

\* via DSC. (differential scanning calorimetry) heating rate = $10Kmin^{-1}$ with nitrogen purge = $50cm^3min^{-1}$ and sample size = 3 mg.
DSC used: Mettler Instrumente AG, System Model TA3000.
# at stoichiometric equivalence.

TABLE 2

| Pilot scale preparation of nylon salts | | | | |
|---|---|---|---|---|
| Nylon Salt | Molar Scale | Wt diacid Kg | Wt diamine Kg | Wt water Kg |
| TPA/HMD | 110 | 18.3 | 21.3 | 60.4 |
| IPA/HMD | 197 | 32.7 | 38.1 | 29.2 |
| TPA/TMHMD | 103 | 17.1 | 16.3 | 66.6 |
| TPA/MXD | 23 | 3.8 | 3.1 | 93.1 |
| IPA/MXD | 95 | 15.8 | 12.9 | 71.3 |
| TPA/IPD | 99 | 16.5 | 16.8 | 66.7 |
| TPA/DDCHM | 10 | 1.7 | 2.1 | 96.2 |
| NDA/HMD | 78 | 16.9 | 15.1 | 68.1 |
| NDA/TMHMD | 83 | 17.9 | 13.1 | 69 |
| HMD used as 60% aqueous solution. | | | | |

TABLE 3

| Data for Nylon Salt Precipitation | | | | | |
|---|---|---|---|---|---|
| Nylon Salt | Concentration, % W/W | Relative Supersaturation Values | Critical Saturation temperature, °C | Overall Yield,% | Crystal Yield,% |
| TPA/TMHMD | 55 | 0.9-1.0 | 94 | 19.5 | 55 |
| TPA/IPD | 55 | 0.2-0.3 | 64 | 16 | 45 |
| TPA/HMD | 60 | 0.01-0.1 | 59 | 20 | 55 |
| TPA/DDCHM | | | | | |
| TPA/MXD | 7.5 | 0.01-0.1 | 97 | 5 | 70 |
| IPA/MXD | 50 | 2.0-10.0 | 55 | 28 | 85 |
| IPA/HMD | 125 | Infinity | 43 | 30 | 53 |
| NDA/HMD | 35 | - | - | 14 | 55 |
| NDA/TMHMD | 45 | - | - | 20 | 65 |

**Claims**

1. A process for producing nylon salts from a hot aqueous solution thereof by cooling under controlled conditions, characterised in that

(a) the aqueous solution at about the boiling point of water contains a salt concentration in the range from 1 to 75%w/w to a saturated solution of said salt,

(b) the hot aqueous solution is initially cooled rapidly till said solution is substantially close to the critical saturation temperature (hereafter 'CST') thereof and then cooled at the rate of 1-3°C per hour, until the temperature is greater than 5°C below the CST, and

(c) said solution from (b) is further cooled, optionally in the presence of a crystalline seeding material, to ambient temperature or below so as to precipitate the nylon salt.

2. A process according to Claim 1 wherein the nylon salt solution has a pH equal to or greater than the pH obtained from a diacid/diamine equimolar balance by upto 0.5.

3. A process according to Claim 1 or 2 wherein the nylon salt is derivable from an aromatic dicarboxylic acid and an aliphatic, cycloaliphatic or an aromatic diamine.

4. A process according to Claim 3 wherein the aromatic dicarboxylic acid is selected from terephthalic acid, isophthalic acid and 2,6-naphthalenedicarboxylic acid.

5. A process according to Claim 3 or 4 wherein the diamine is selected from hexamethylenediamine, 2,2,4-trimethylhexamethylene diamine, 2,4,4-trimethylhexamethylene diamine, isophorone diamine, meta-xylylene diamine, para-xylylene diamine, dodecamethylene diamine and 4,4'-methylenebis(cyclohexylamine).

6. A process according to any one of the preceding Claims wherein the nylon salt precipitate is purified and crystallised into fine, free-flowing powder.

7. A process for producing polyamides by polycondensation of a nylon salt produced by a process according to any one of the preceding Claims.

7

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| D,A | GB-A-1 034 307 (I.C.I.)<br>--- | | C 08 G 69/28 |
| D,A | US-A-3 337 612 (D.L. SHARPS)<br>--- | | |
| A | PATENT ABSTRACTS OF JAPAN, vol. 6, no. 231 (C-135)[1109], 17th November 1982; & JP-A-57 134 441 (TORAY K.K.) 19-08-1982<br>--- | | |
| A | CHEMICAL ABSTRACTS, vol. 78, no. 26, 1973, page 15, abstract no. 160328b, Columbus, Ohio, US; & JP-A-73 05 727 (TORAY INDUSTRIES, INC.) 24-01-1973<br>----- | | |

TECHNICAL FIELDS
SEARCHED (Int. Cl.5)

C 08 G

The present search report has been drawn up for all claims

| Place of search | Date of completion of the search | Examiner |
|---|---|---|
| THE HAGUE | 10-10-1990 | LEROY ALAIN |